# EUROPÄISCHE PATENTSCHRIFT

(11) **EP 2 544 926 B1**
(45) Veröffentlichungstag und Bekanntmachung des Hinweises auf die Patenterteilung: **10.09.2014**
(21) Anmeldenummer: 11707789.1
(22) Anmeldetag: 15.02.2011
(51) Int. Cl.: B60R 22/02, B60R 22/48, B60N 2/68

(54) **FAHRZEUG MIT EINEM SICHERHEITSGURTSYSTEM**
VEHICLE HAVING A SAFETY BELT SYSTEM
VÉHICULE ÉQUIPÉ D'UN SYSTÈME DE CEINTURE DE SÉCURITÉ

(30) Priorität: 08.03.2010 DE 102010010613
(43) Veröffentlichungstag der Anmeldung: 16.01.2013
(73) Patentinhaber: Volkswagen Aktiengesellschaft, 38440 Wolfsburg (DE)
(72) Erfinder: BAUR, Elmar, 29399 Wahrenholz (DE); VOIGT, Marcus, 13581 Berlin (DE); WALTER, Helmut, 38162 Cremlingen (DE)
(86) Internationale Anmeldenummer: PCT/EP2011/000694
(87) Internationale Veröffentlichungsnummer: WO 2011/110274

(56) Entgegenhaltungen:
- DE-A1-102005 041 376
- US-A1- 2006 138 797

## Beschreibung

Die Erfindung betrifft ein Fahrzeug mit einem Sicherheitsgurtsystem nach dem Oberbegriff des Patentanspruchs 1 sowie ein Verfahren zur Neigungsverstellung der Rückenlehne eines Fahrzeugsitzes nach dem Patentanspruch 15.

Die Rückenlehne eines Beifahrersitzes kann mittels einer elektronischen Steuereinrichtung elektromotorisch angesteuert werden, wodurch unter anderem auch die Rückenlehne in unterschiedliche Neigungspositionen gebracht werden kann.

Ein gattungsgemäßes Fahrzeug weist einen Beifahrersitz mit elektrisch neigungsverstellbarer Rückenlehne auf. Die Rückenlehne des Beifahrersitzes kann auf eine Vorgabe eines Sitzbenutzers mithilfe einer elektronischen Steuereinrichtung von einer Normalposition mit geringerem Neigungswinkel in eine Liegeposition mit größerem Neigungswinkel verstellt werden.

Eine solche Neigungsverstellung in die Liegeposition ist bei sogenannten Integralsitzen ohne Sicherheitsprobleme möglich, da der zugeordnete Sicherheitsgurt zumindest im Schulterbereich der Rückenlehne unmittelbar an den Fahrzeugsitz angebunden ist. Bei einer Neigungsverstellung wird somit der im Schulterbereich befindliche Anbindungspunkt automatisch mitgeschwenkt, so dass auch in der Liegeposition des Fahrzeugsitzes bei angelegtem Sicherheitsgurt ein einwandfreier Gurtverlauf über den Sitzbenutzer gewährleistet ist.

Im Unterschied zu einem solchen Integralsitz kann der dem Beifahrersitz zugeordnete Sicherheitsgurt im Beckenbereich sowie im Schulterbereich auch unmittelbar karosserieseitig an der Fahrzeugsäule angebunden sein. In diesem Fall kann der Sicherheitsgurt einer Neigungsverstellung der Rückenlehne nicht folgen, sondern verbleibt dieser unverändert. Dadurch ergibt sich in der Liegeposition des Beifahrersitzes ein nicht mehr einwandfreier Gurtverlauf bei angelegtem Sicherheitsgurt, was im Fahrbetrieb zu Sicherheitsproblemen führen kann.

Die US 2006/0138797 offenbart ein Fahrzeug mit einem Fahrzeugsitz gemäß dem Oberbegriff des Anspruchs 1.

Die Aufgabe der Erfindung besteht darin, ein Fahrzeug mit einem Sicherheitsgurtsystem bereitzustellen, bei dem ohne Nutzung eines Integralsitzes Sicherheitsprobleme in der Liegeposition des Fahrzeugsitzes verhindert werden können.

Die Aufgabe ist durch die Merkmale des Patentanspruches 1 oder des Patentanspruches 15 gelöst. Bevorzugte Weiterbildungen der Erfindung sind in den Unteransprüchen offenbart.

Gemäß dem kennzeichnenden Teil des Patentanspruches 1 ist die Steuereinrichtung mit einer Überwachungseinrichtung in Signalverbindung. Diese kann zumindest einen Gurtparameter erfassen, mit dem ermittelbar ist, ob in der Liegeposition des Fahrzeugsitzes bei angelegtem Sicherheitsgurt ein einwandfreier Gurtverlauf gewährleistet ist. Für den Fall, dass die Überwachungseinrichtung einen nicht einwandfreien Gurtverlauf ermittelt, können daher geeignete Sicherheitsmaßnahmen von der Steuereinrichtung veranlasst werden.

Die Erfindung ist insbesondere bei elektrisch verstellbaren Fahrzeugsitzen einsetzbar, bei denen die elektronische Steuereinrichtung die Rückenlehne elektromotorisch ansteuern kann. In diesem Fall kann der Sitzbenutzer etwa durch einen entsprechenden Tastendruck eine Liegeposition mit größerem Neigungswinkel auswählen. Vor Beginn der Verstellbewegung in die Liegeposition kann dann die Überwachungseinrichtung den Gurtparameter erfassen, auf dessen Grundlage ermittelt wird, ob in der Liegeposition ein einwandfreier Gurtverlauf gewährleistet werden kann.

Bei Ermittlung eines einwandfreien Gurtverlaufes kann die Überwachungseinrichtung ein Freigabesignal generieren, das zur elektronischen Steuereinrichtung übermittelt wird. Erst mit Empfang des Freigabesignals kann dann die Steuereinrichtung die Verstellbetätigung in die Liegeposition beginnen oder fortsetzen.

Demgegenüber kann der von der Überwachungseinrichtung erfasste Gurtparameter auch auf einen fehlerhaften Gurtverlauf in der Liegeposition hindeuten. In diesem Fall wird kein Freigabesignal zur elektronischen Steuereinrichtung übermittelt, so dass eine Verstellbetätigung der Rückenlehne in die Liegeposition aus Sicherheitsgründen unterbunden ist.

Der Fahrzeugsitz kann als Beifahrersitz in einer Sicherheitsgurtanordnung eingebunden sein, die einen frontseitigen Sicherheitsgurt und einen fondseitigen Sicherheitsgurt umfasst. Der frontseitige Sicherheitsgurt kann dabei ein herkömmlicher Dreipunkt-Sicherheitsgurt sein, für den Anbindungspunkte im Schulter- sowie Beckenbereich unmittelbar an der Fahrzeugsäule vorgesehen sind. Bei normaler, das heißt hochgestellter Sitzposition des Beifahrersitzes kann in üblicher Weise dieser Frontgurt eingesetzt werden. Demgegenüber kann zumindest in der Liegeposition auch der Fondgurt Anwendung finden. Damit ist aufgrund seiner Anordnung im Fondbereich ein mit Bezug auf die Sicherheit günstiger Verlauf des Schultergurts nach hinten gewährleistet, und zwar unabhängig von der eingestellten Neigung des Beifahrersitzes.

Vor diesem Hintergrund kann die Überwachungseinrichtung als Gurtparameter eine Gurtbetätigung des Fondgurtes oder des Frontgurtes durch den Sitzbenutzer des Beifahrersitzes erfassen. Erhält daher die elektronische Steuereinrichtung als Vorgabe eine Neigungsverstellung in die Liegeposition, so wird zunächst durch die Überwachungseinrichtung überprüft, ob der Sitzbenutzer des Beifahrersitzes den dafür vorgesehenen Fondgurt benutzt oder nicht. Erst bei Nutzung des Fondgurtes kann dann die Sicherheitseinrichtung den Beifahrersitz in die Liegeposition verstellen. Die Überwachungseinrichtung kann daher zumindest ein Sensorelement aufweisen, das erfasst, ob am Sitzbenutzer des Beifahrersitzes der Frontgurt oder der Fondgurt angelegt ist.

In der oben genannten Sicherheitsanordnung kann also bei Nutzung des Beifahrersitzes nicht nur der Frontgurt, sondern auch der Fondgurt des dahinter angeordneten Fahrzeugsitzes eingesetzt werden. Um bei Anwendung des Fondgurtes einen einwandfreien Gurtverlauf zu gewährleisten, kann der Fondgurt einen in Fahrzeuglängsrichtung verstellbaren Gurtendbeschlag aufweisen. Dieser kann für den Einsatz am Beifahrersitz von seiner fondseitigen Endbeschlagposition in eine frontseitige Endbeschlagposition verstellt werden, wodurch ein einwandfreier Gurtverlauf im Beckenbereich des Beifahrersitzes gewährleistet ist.

In entsprechender Weise kann die Überwachungseinrichtung ein Sensorelement aufweisen, das den Endbeschlag des Fondgurtes in seiner frontseitigen Endbeschlagposition erfassen kann. In einer bevorzugten Ausführung kann der Endbeschlag des Fondgurtes eine Gurtzunge sein, die jeweils in ein Endbeschlag-Gurtschloss des Fondsitzes oder ein Endbeschlag-Gurtschloss des Beifahrersitzes einrasten kann. In diesem Fall kann das Sensorelement unmittelbar im Endbeschlag-Gurtschloss des Beifahrersitzes angeordnet sein und als Schalter ausgeführt sein, der beim Einstecken der Endbeschlag-Gurtzunge ein Schaltsignal generiert.

Die Überwachungseinrichtung kann ein weiteres Sensorelement aufweisen, das erfasst, ob der Sitzbenutzer des Beifahrersitzes überhaupt angeschnallt ist. Hierfür kann das Sensorelement ebenfalls als ein Schalter im Anschnall-Gurtschloss des Beifahrersitzes angeordnet sein und durch Betätigung des Gurtschlosses erkennen, dass der Sitzbenutzer angeschnallt ist.

Darüber hinaus ist aus Sicherheitsgründen zu kontrollieren, ob der vom Frontsitznutzer angelegte Sicherheitsgurt tatsächlich der Fondgurt ist, um die Verstellbetätigung in die Liegeposition freizugeben. Hierzu kann die Überwachungseinrichtung ein drittes Sensorelement aufweisen, das erfasst, ob der Frontgurt betätigt ist oder nicht. Hierzu kann das Sensorelement eine Gurtauszugslänge des Frontgurtes detektieren.

Mit den oben genannten ersten bis dritten Sensorelementen können somit drei Abfragen beantwortet werden, nämlich ob erstens der Fondgurt mit seinem Endbeschlag im Frontbereich ist, ob zweitens der Sitzbenutzer des Beifahrersitzes angeschnallt ist, sowie ob drittens der im Einsatz befindliche Sicherheitsgurt tatsächlich der Fondgurt und nicht der Frontgurt ist. Erst wenn diese Abfragen positiv beantwortet sind, kann die Überwachungseinrichtung das oben erwähnte Freigabesignal erzeugen.

Aus Sicherheitsgründen ist auch eine Konstellation von Bedeutung, bei der bei bereits in die Liegeposition verbrachtem Beifahrersitz der Fondgurt abgeschnallt wird. In diesem Fall ist es von Vorteil, wenn die Steuereinrichtung zumindest ein Warnsignal erzeugt. Zusätzlich kann die Steuereinrichtung die Rückenlehne auch in eine Normalposition mit geringerem Neigungswinkel verstellen, um mögliche Sicherheitsprobleme zu reduzieren.

In einer weiteren Konstellation ist es denkbar, dass der Sitzbenutzer in der Liegeposition des Beifahrersitzes vom Fondgurt in den Frontgurt wechselt. Auch in diesem Fall kann die Steuereinrichtung ein Warnsignal erzeugen und/oder die Rückenlehen in eine Normalposition mit geringerem Neigungswinkel verstellen.

Von diesen drei Abfragen kann gegebenenfalls eine weggelassen werden. So kann etwa auf das Sensorelement, das den Endbeschlag des Fondgurts in seiner frontseitigen Endbeschlagposition erfasst, verzichtet werden, da eine nicht sachgemäße Verwendung der Endbeschlag-Gurtzunge des Fondgurts ohne weiteres vom Sitzbenutzer erkannt werden kann.

Außerdem kann die Endbeschlag-Gurtzunge und/oder die Anschnall-Gurtzunge mit einer zusätzlichen Kodierung versehen sein, die vom Sensorelement des Endbeschlag-Gurtschlosses und/oder Anschnall-Gurtschlosses erkannt werden kann. In diesem Fall könnte gegebenenfalls der oben erwähnte Gurtauszugssensor eingespart werden.

Nachfolgend ist ein Ausführungsbeispiel der Erfindung anhand der beigefügten Figuren beschrieben.

Es zeigen:
- Fig. 1: in einer teilweisen perspektivischen Darstellung einen Fahrzeuginnenraum mit einem Beifahrersitz sowie einer dahinter angeordneten fondseitigen Sitzreihe;
- Fig. 2: in einer Ansicht entsprechend der Fig. 1 den fondseitigen Sicherheitsgurt in seiner frontseitigen Anlegeposition; und
- Fig. 3: in einer Ansicht entsprechend der Fig. 1 und 2 einen Sitzbenutzer des Beifahrersitzes mit angelegtem fondseitigen Sicherheitsgurt.

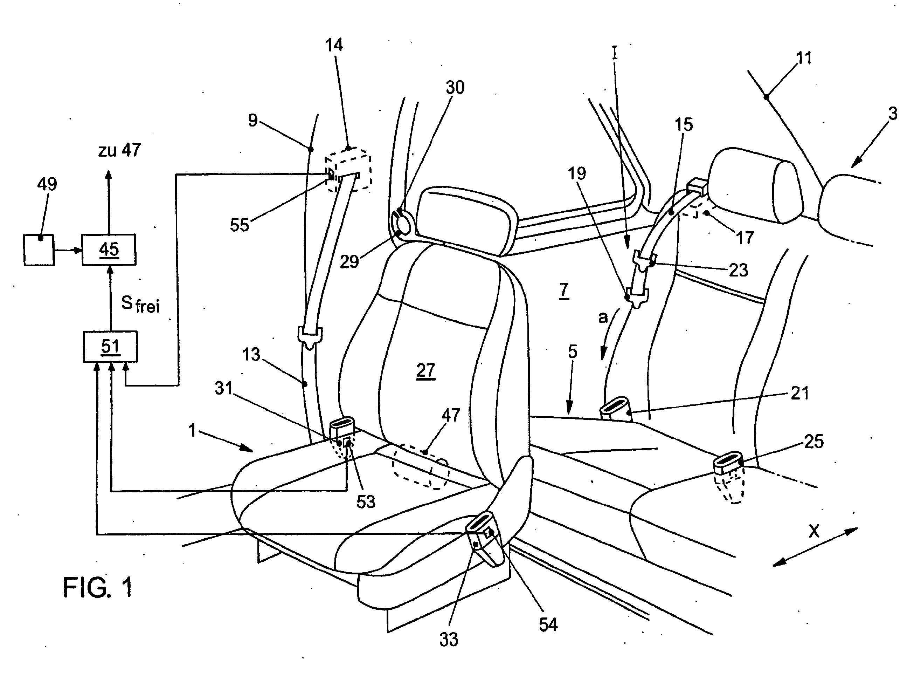

In der Fig. 1 ist in einer Prinzipdarstellung ein Ausschnitt aus einem Fahrzeuginnenraum mit einem frontseitigen Beifahrersitz 1 sowie einer fondseitigen Sitzreihe 3 gezeigt, von der nur der rechte äußere Fondsitz 5 dargestellt ist. Der Fahrzeuginnenraum ist gemäß der Fig. 1 durch eine Fahrzeugseitenwand 7 begrenzt, die nur ausschnittsweise im Bereich zwischen der B-Säule 9 und der C-Säule 11 gezeigt ist. Die Fahrzeugseitenwand 7 geht oberseitig in ein ebenfalls nicht dargestelltes Fahrzeugdach über.

Wie aus der Fig. 1 weiter hervorgeht, ist an der B-Säule 9 ein Frontgurt 13 angebunden. Dieser ist mit seinem oberen Gurtende in einem Retraktor 14 aufgerollt und mit seinem unteren Gurtende an einem nicht weiter dargestellten karosserieseitigen Endbeschlag festgelegt. Dem Fondsitz 5 ist ebenfalls ein Sicherheitsgurt 15 zugeordnet. Dessen oberes Gurtende ist in einem, im Fondsitz 5 integrierten Retraktor 17 aufgerollt. Das untere Gurtbandende des Fondgurts 15 weist eine später beschriebenen Endbeschlag-Gurtzunge 19 aufweist, die in einem als Gurtschloss ausgebildeten Endbeschlag 21 verrastbar ist.

Zum Verrasten des Fondgurtes 15 in seinem unteren Endbeschlag 21 wird dessen Endbeschlag-Gurtzunge 19 gemäß der Fig. 1 in einer Bewegungsrichtung a in das Endbeschlag-Gurtschloss 21 eingeführt. Auf diese Weise ist eine fondseitige, in der Fig. 1 mit l gekennzeichnete Anlegeposition I bereitgestellt, bei der ein Sitzbenutzer des Fondsitzes 5 in bekannter Weise den Fondgurt 15 anlegen kann.

Der fondseitige Sicherheitsgurt 15 ist in der Anlegeposition I entlang einer Seitenwange der Rückenlehne des Fondsitzes 5 nach unten bis zum Endbeschlag-Gurtschloss 21 geführt. Zwischen der unteren Endbeschlag-Gurtzunge 19 und dem oberen Retraktor 17 ist eine weitere, verschiebbar angeordnete Anschnall-Gurtzunge 23 vorgesehen. Diese kann zum Anlegen des Sicherheitsgurtes 15 in bekannter Weise über den Sitzbenutzer im korrespondierenden Anschnall-Gurtschloss 25 lösbar festgelegt werden. Das Anschnall-Gurtschloss 25 ist in Fahrzeugquerrichtung auf der, dem Endbeschlag-Gurtschloss 21 gegenüberliegenden Seite des Fahrzeugsitzes 5 angeordnet.

Wie aus der Fig. 1 weiter hervorgeht, weist der Beifahrersitz 1 an der Oberseite der Rückenlehne 27 ein Gurtumlenkelement 29 auf. Dieses ist an einer, der Fahrzeugseitenwand 7 zugewandten Seite positioniert.

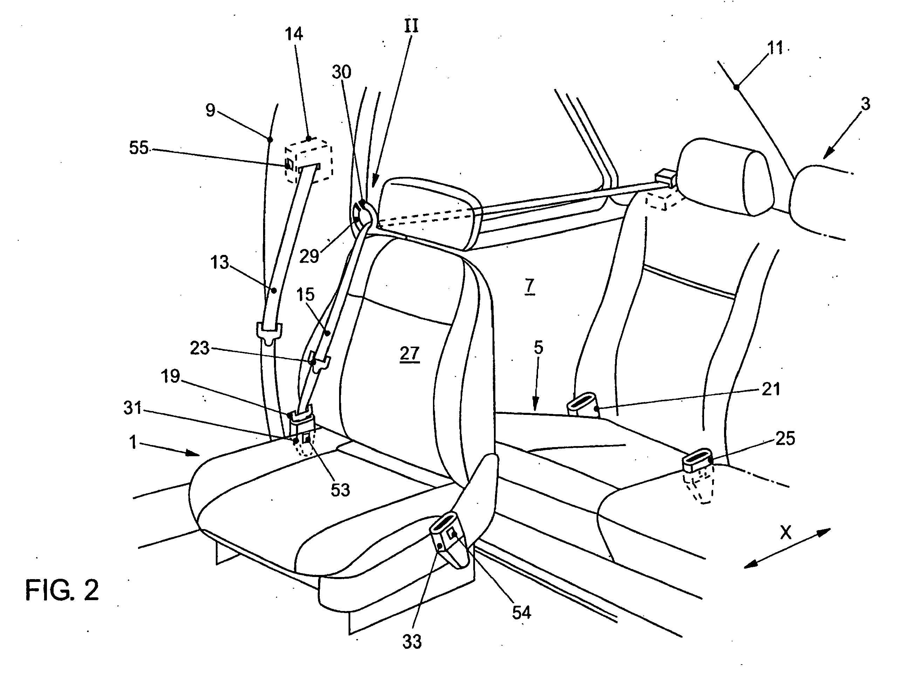

Das Gurtumlenkelement 29 ist mit einem seitlich offenen Führungsschlitz 30 ausgebildet, in dem der fondseitige Sicherheitsgurt 15 einlegbar ist, wie es zur Herstellung einer in der Fig. 2 gezeigten frontseitigen Anlegeposition II des fondseitigen Sicherheitsgurtes 15 erforderlich ist.

Um den fondseitigen Sicherheitsgurt 15 in seine in der Fig. 2 gezeigte frontseitige Anlegeposition II zu verbringen, sind dem Beifahrersitz 1 seitlich angeordnete Gurtschlösser 31, 33 zugeordnet. Das der Fahrzeugwand 7 zugewandte Gurtschloss 31 dient dabei als ein Endbeschlag-Gurtschloss, in dem die Endbeschlag-Gurtzunge 19 des fondseitigen Sicherheitsgurtes 15 einsteckbar ist. In das in Fahrzeugquerrichtung gegenüberliegende seitliche Anschnall-Gurtschloss 33 ist dagegen die entlang dem Gurtband verschiebbare Gurtzunge 23 einsteckbar, um den fondseitigen Sicherheitsgurt 15 anzulegen.

Zur Bereitstellung dieser zweiten Anlegeposition II ist zunächst das Endbeschlag-Gurtschloss 19 des.fondseitigen Sicherheitsgurtes 15 vom Endbeschlag-Gurtschloss 21 zu lösen. Anschließend wird der Sicherheitsgurt 15 in das Umlenkelement 29 eingelegt und das Gurtschloss 19 in den frontseitigen Endbeschlag 21 lösbar festgelegt. Der eigentliche frontseitige Sicherheitsgurt 13 bleibt demgegenüber unbenutzt.

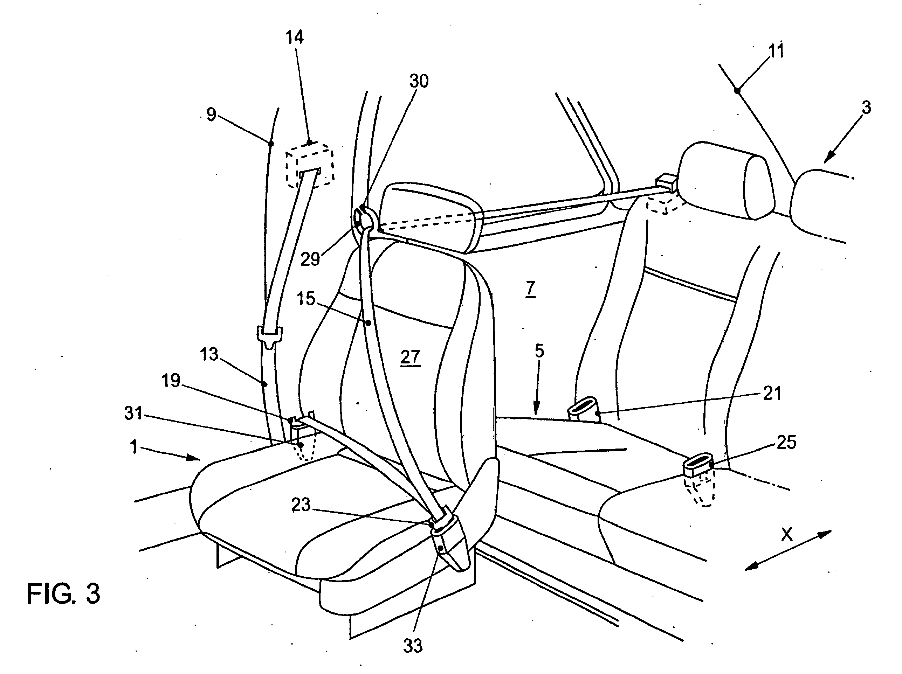

In der weiteren Fig. 3 ist der Verlauf des Fondgurts 15 gezeigt, wenn dieser vom Sitzbenutzer des Beifahrersitzes 1 angelegt ist. Daraus geht hervor, dass der Sicherheitsgurt 15 ausgehend vom Schulterbereich des Beifahrersitzes 1 in etwa horizontal nach hinten in den Fondbereich verläuft. Dieser horizontale Verlauf in den Fondbereich kann selbst bei einer Neigungsverstellung der Rückenlehne 27 in eine Liegeposition in etwa beibehalten werden, wodurch stets ein optimaler Gurtverlauf im Schulterbereich gewährleistet ist. Zusätzlich ist gemäß der Fig. 3 auch der untere Endbeschlag des fondseitigen Sicherheitsgurtes 15 in den Frontbereich verlagert, wodurch auch der untere Anlenkpunkt im Beckenbereich so liegt, dass ein einwandfreier Gurtverlauf im Beckenbereich vorhanden ist.

Sofern keine Liegeposition des Beifahrersitzes 5 beabsichtigt ist, kann der fondseitige Sicherheitsgurt 15 wieder in seine, in der Fig. 1 gezeigte fondseitige Anlegeposition I verbracht werden. In diesem Fall kann im Fahrbetrieb der eigentliche frontseitige Sicherheitsgurt 13 angelegt werden, da keine Neigungsverstellung der Rückenlehne 27 in eine Liegeposition zu erwarten ist.

Der in den Figuren 1 bis 3 gezeigte Beifahrersitz 1 ist mittels einer in der Fig. 1 angedeuteten elektronischen Steuereinrichtung 45 elektromotorisch ansteuerbar, um die Neigung der Rückenlehne 27 zu verstellen. Hierzu ist die elektronische Steuereinrichtung 45 mit einem angedeuteten Gleichstrommotor 47 in Signalverbindung, der bei Aktivierung den Neigungswinkel der Rückenlehne 27 einstellt. Hierzu kann der Sitzbenutzer in einer Eingabeeinheit 49 unterschiedliche Neigungspositionen auswählen.

Die elektronische Steuereinrichtung 45 ist außerdem mit einer Überwachungseinrichtung 51 in Signalverbindung, die einen Gurtparameter erfassen, mit dem vor dem Start der Verstellbetätigung in die Liegeposition ermittelbar ist, ob voraussichtlich bei angelegtem Sicherheitsgurt ein einwandfreier Gurtverlauf gewährleistet ist oder nicht. Hierzu weist die Überwachungseinrichtung Sensorelemente 53, 54, 55 auf, mit deren Hilfe Gurtparameter generiert werden, auf deren Grundlage die Überwachungseinrichtung 51 erfassen kann, ob der Sitzbenutzer des Beifahrersitzes 1 den Frontgurt 13 oder den Fondgurt 15 angelegt hat. Hierzu ist das erste Sensorelement 53 als ein Schalter im frontseitigen Endbeschlag-Gurtschloss 31 angeordnet. Bei Betätigung des frontseitigen Endbeschlag-Gurtschlosses 31 durch die Endbeschlag-Gurtzunge 19 des Fondgurtes 15 erfolgt daher eine entsprechende Meldung an die Überwachungseinrichtung 51, dass sich der Fondgurt 15 in seiner frontseitigen Ablegeposition II befindet, die in der Fig. 2 gezeigt ist.

Das zweite Sensorelement 54 ist ebenfalls als Schalter im frontseitigen Anschnall-Gurtschloss 33 angeordnet. Bei einer Betätigung des Gurtschlosses 33 erfolgt daher eine entsprechende Meldung an die Überwachungseinrichtung 51, wonach zumindest einer der Sicherheitsgurte 13, 15 vom Sitzbenutzer des Beifahrersitzes 1 angelegt ist.

Um sicherzustellen, dass der angelegte Sicherheitsgurt der Fondgurt 15 ist, ist das dritte Sensorelement 55 im Retraktor 14 des Frontgurtes 13 vorgesehen. Mit dem dritten Sensorelement 55 kann eine Gurtauszugslänge des Retraktors 14 ermittelt werden. Liegt diese bei 0, so erkennt die Überwachungseinrichtung 51, dass der Sicherheitsgurt 13 nicht betätigt ist. Folgerichtig kann daraus geschlossen werden, dass der vom Beifahrernutzer angeschnallte Sicherheitsgurt der Fondgurt 15 ist. Liegen somit von sämtlichen Sensorelementen 53, 54, 55 positive Meldungen vor, erzeugt die Überwachungseinrichtung 51 ein Freigabesignal S_{frei}, wodurch eine Verstellbetätigung des Beifahrersitzes 1 in die Liegeposition freigegeben wird.

### Bezugszeichenliste

- 1: frontseitiger Fahrzeugsitz
- 3: hintere Sitzreihe
- 5: fondseitiger Fahrzeugsitz
- 7: Fahrzeugseitenwand
- 9: B-Säule
- 11: C-Säule
- 13: frontseitiger Sicherheitsgurt
- 14: Retraktor
- 15: fondseitiger Sicherheitsgurt
- 17: Retraktor
- 19: Endbeschlag-Gurtzunge
- 21: Endbeschlag-Gurtschloss
- 23: Anschnall-Gurtzunge
- 25: Anschnall-Gurtschloss
- 27: Rückenlehne
- 29: Umlenkelement
- 30: Führungsschlitz
- 31: frontseitiges Endbeschlag-Gurtschloss
- 33: Anschnall-Gurtschloss
- 35: Führungselement
- 37: Rückenlehne
- 39: Führungsschiene
- 41: Führungsschlitz
- 43: Gurtschloss
- I, II: Anlegepositionen
- a: Bewegungsrichtung.
- 45: elektronische Steuereinrichtung
- 47: Stellmotor
- 49: Eingabeeinheit
- 51: Überwachungseinrichtung
- 53, 54, 55: Sensorelemente
- S_{frei}: Freigabesignal

## Patentansprüche

1. Fahrzeug mit zumindest einem Fahrzeugsitz (1) mit einer neigungsverstellbaren Rückenlehne (27) und einer Steuereinrichtung (45), mit der auf eine Vorgabe eines Sitzbenutzers die Rückenlehne (27) in eine Liegeposition mit größerem Neigungswinkel ansteuerbar ist, **dadurch gekennzeichnet, dass** die Steuereinrichtung (45) mit einer Überwachungseinrichtung (51) in Signalverbindung ist, die zumindest einen Gurtparameter erfasst, mit dem ermittelbar ist, ob in der Liegeposition ein einwandfreier Gurtverlauf eines am Sitzbenutzer angelegten Sicherheitsgurts (13, 15) gewährleistet ist.

2. Fahrzeug nach Anspruch 1, **dadurch gekennzeichnet, dass** bei Ermittlung eines einwandfreien Gurtverlaufes die Überwachungseinrichtung (51) eine Verstellbetätigung der Rückenlehne (27) in die Liegeposition freigibt.

3. Fahrzeug nach Anspruch 1 oder 2, **dadurch gekennzeichnet, dass** bei Ermittlung eines fehlerhaften Gurtverlaufes die Überwachungseinrichtung (51) eine Verstellbetätigung der Rückenlehne (27) in die Liegeposition unterbindet.

4. Fahrzeug nach einem der Ansprüche 1, 2 oder 3, **dadurch gekennzeichnet, dass** dem Fahrzeugsitz (1) als frontseitigen Fahrzeugsitz eine Sicherheitsgurtanordnung zugeordnet ist, die einen frontseitigen Sicherheitsgurt (13) und einen fondseitigen Sicherheitsgurt (15) aufweist, wobei zum Erreichen eines einwandfreien Gurtverlaufes in der Liegeposition der fondseitige Sicherheitsgurt (15) am Sitzbenutzer des frontseitigen Fahrzeugsitzes (1) anlegbar ist.

5. Fahrzeug nach Anspruch 4, **dadurch gekennzeichnet, dass** die Überwachungseinrichtung (51) als Gurtparameter eine Gurtbetätigung des fondseitigen Sicherheitsgurts (15) durch den Sitzbenutzer des frontseitigen Fahrzeugsitzes (1) erfasst.

6. Fahrzeug nach Anspruch 4 oder 5, **dadurch gekennzeichnet, dass** die Überwachungseinrichtung (51) zumindest ein Sensorelement (53, 54, 55) aufweist, das erfasst, ob am Sitzbenutzer des frontseitigen Fahrzeugsitzes (1) der frontseitige oder der fondseitige Sicherheitsgurt (13, 15) angelegt ist.

7. Fahrzeug nach Anspruch 4, 5 oder 6, **dadurch gekennzeichnet, dass** der fondseitige Sicherheitsgurt (15) einen in Fahrzeuglängsrichtung (x) verstellbaren Gurtendbeschlag (19) aufweist, der für den Einsatz des fondseitigen Sicherheitsgurts (15) am frontseitigen Fahrzeugsitz (1) von einer fondseitigen Endbeschlagposition in eine frontseitige Endbeschlagposition verstellbar ist.

8. Fahrzeug nach Anspruch 7, **dadurch gekennzeichnet, dass** ein Sensorelement (53) der Überwachungseinrichtung (51) den Endbeschlag (19) des fondseitigen Sicherheitsgurts (15) in der frontseitigen Endbeschlagposition erfasst.

9. Fahrzeug nach einem der vorhergehenden Ansprüche, **dadurch gekennzeichnet, dass** ein Sensorelement (54) der Überwachungseinrichtung (51) erfasst, ob das zum Anschnallen des Sicherheitsgurts (13, 15) vorgesehene Anschnall-Gurtschloss (33) des frontseitigen Fahrzeugsitzes (1) betätigt ist.

10. Fahrzeug nach einem der Ansprüche 4 bis 9, **dadurch gekennzeichnet, dass** ein Sensorelement (55) der Überwachungseinrichtung (51) erfasst, ob der frontseitige Sicherheitsgurt (13) betätigt ist, wobei das Sensorelement (55) insbesondere eine Gurtauszugslänge des frontseitigen Sicherheitsgurts (13) erfasst.

11. Fahrzeug nach Anspruch 10, **dadurch gekennzeichnet, dass** die Überwachungseinrichtung (51) die Verstellbetätigung des Fahrzeugsitzes (1) in die Liegeposition freigibt, wenn das erste Sensorelement (53) den fondseitigen Sicherheitsgurt (15) in seiner frontseitigen Endbeschlagposition erkennt, das zweite Sensorelement (54) eine Betätigung des Anschnall-Gurtschlosses (33) des frontseitigen Fahrzeugsitzes (1) erkennt und das dritte Sensorelement (55) eine Nichtbetätigung des frontseitigen Sicherheitsgurtes (13) erkennt.

12. Fahrzeug nach einem der vorhergehenden Ansprüche, **dadurch gekennzeichnet, dass** bei einem Fall, bei dem sich der frontseitige Fahrzeugsitz (1) in der Liegeposition befindet und der Sitzbenutzer des frontseitigen Fahrzeugsitzes (1) vom fondseitigen Sicherheitsgurts (15) abschnallt, die Steuereinrichtung (45) ein Warnsignal erzeugt und/oder die Rückenlehne (27) in eine Normalposition mit größerem Neigungswinkel verstellt.

13. Fahrzeug nach einem der Ansprüche 4 bis 12, **dadurch gekennzeichnet, dass** bei einem Fall, bei dem sich der frontseitige Fahrzeugsitz (1) in der Liegeposition befindet und der Sitzbenutzer des frontseitigen Fahrzeugsitzes (1) vom fondseitigen zum frontseitigen Sicherheitsgurt (13) wechselt, die Steuereinrichtung (45) ein Warnsignal erzeugt und/oder die Rückenlehne (27) in eine Normalposition verstellt.

14. Fahrzeug nach einem der vorhergehenden Ansprüche 4 bis 13, **dadurch gekennzeichnet, dass** bei einem Fall, bei dem sich der frontseitige Fahrzeugsitz (1) in der Liegeposition befindet und der Sitzbenutzer mit dem fondseitigen Sicherheitsgurt (15) angeschnallt ist, die Steuereinrichtung (45) eine dem fondseitigen Fahrzeugsitz (5) zugeordnete Fahrzeugtür sperrt.

15. Verfahren zur Neigungsverstellung der Rückenlehne (27) eines Fahrzeugsitzes (1) in eine Liegeposition in einem Fahrzeug nach einem der vorhergehenden Ansprüche.

## Claims

1. Vehicle having at least one vehicle seat (1) with an inclination-adjustable backrest (27) and a control device (45), with which, at the stipulation of a seat user, the backrest (27) can be driven into a reclining position with a greater angle of inclination, **characterized in that** the control device (45) has a signal connection to a monitoring device (51) which detects at least one belt parameter with which it can be determined whether, in the reclining position, a satisfactory belt extension of a safety belt (13, 15) put on by the seat user is ensured.

2. Vehicle according to Claim 1, **characterized in that**, when a satisfactory belt extension is determined, the monitoring device (51) enables an adjustment actuation of the backrest (27) into the reclining position.

3. Vehicle according to Claim 1 or 2, **characterized in that**, when a defective belt extension is determined, the monitoring device (51) prevents an adjustment actuation of the backrest (27) into the reclining position.

4. Vehicle according to one of Claims 1, 2 or 3, **characterized in that** the vehicle seat (1), as a front vehicle seat, is assigned a safety belt arrangement which has a front safety belt (13) and a rear safety belt (15), wherein, in order to achieve a satisfactory belt extension in the reclining position, the rear safety belt (15) can be put on by the seat user of the front vehicle seat (1).

5. Vehicle according to Claim 4, **characterized in that** the monitoring device (51) detects, as a belt parameter, a belt actuation of the rear safety belt (15) by the seat user of the front vehicle seat (1).

6. Vehicle according to Claim 4 or 5, **characterized in that** the monitoring device (51) has at least one sensor element (53, 54, 55) which detects whether the front or the rear safety belt (13, 15) has been put on by the seat user of the front vehicle seat (1).

7. Vehicle according to Claim 4, 5 or 6, **characterized in that** the rear safety belt (15) has a belt end fitting (19) which is adjustable in the longitudinal direction (x) of the vehicle and is adjustable from a rear end fitting position into a front end fitting position for use of the rear safety belt (15) on the front vehicle seat (1).

8. Vehicle according to Claim 7, **characterized in that** a sensor element (53) of the monitoring device (51) detects the end fitting (19) of the rear safety belt (15) in the front end fitting position.

9. Vehicle according to one of the preceding claims, **characterized in that** a sensor element (54) of the monitoring device (51) detects whether the buckle-up belt buckle (33) of the front vehicle seat (1), which buckle-up belt buckle is provided for buckling up the safety belt (13, 15), is actuated.

10. Vehicle according to one of Claims 4 to 9, **characterized in that** a sensor element (55) of the monitoring device (51) detects whether the front safety belt (13) is actuated, wherein the sensor element (55) in particular detects a belt extension length of the front safety belt (13).

11. Vehicle according to Claim 10, **characterized in that** the monitoring device (51) enables the adjustment actuation of the vehicle seat (1) into the reclining position when the first sensor element (53) identifies the rear safety belt (15) in the front end fitting position thereof, the second sensor element (54) identifies an actuation of the buckle-up belt buckle (33) of the front vehicle seat (1) and the third sensor element (55) identifies a non-actuation of the front safety belt (13).

12. Vehicle according to one of the preceding claims, **characterized in that**, in a situation in which the front vehicle seat (1) is in the reclining position and the seat user of the front vehicle seat (1) unbuckles from the rear safety belt (15), the control device (45) generates a warning signal and/or adjusts the backrest (27) into a normal position with a greater angle of inclination.

13. Vehicle according to one of Claims 4 to 12, **characterized in that**, in a situation in which the front vehicle seat (1) is in the reclining position and the seat user of the front vehicle seat (1) changes from the rear to the front safety belt (13), the control device (45) generates a warning signal and/or adjusts the backrest (27) into a normal position.

14. Vehicle according to one of the preceding Claims 4 to 13, **characterized in that**, in a situation in which the front vehicle seat (1) is in the reclining position and the seat user is buckled up with the rear safety belt (15), the control device (45) locks a vehicle door assigned to the rear vehicle seat (5).

15. Method for adjusting the inclination of the backrest (27) of a vehicle seat (1) into a reclining position in a vehicle according to one of the preceding claims.

## Revendications

1. Véhicule comprenant au moins un siège de véhicule (1) avec un dossier (27) d'inclinaison réglable et un dispositif de commande (45) avec lequel le dossier (27), sur demande d'un utilisateur du siège, peut être commandé dans une position couchée avec un plus grand angle d'inclinaison, **caractérisé en ce que** le dispositif de commande (45) est en liaison par signal avec un dispositif de surveillance (51) qui détecte au moins un paramètre de ceinture avec lequel on peut détecter si dans la position couchée, une application parfaite d'une ceinture de sécurité (13, 15) appliquée contre l'utilisateur du siège est assurée.

2. Véhicule selon la revendication 1, **caractérisé en ce qu'**à la détection d'une application parfaite de la ceinture, le dispositif de surveillance (51) libère un actionnement de réglage du dossier (27) dans la position couchée.

3. Véhicule selon la revendication 1 ou 2, **caractérisé en ce qu'**à la détection d'une application incorrecte de la ceinture, le dispositif de surveillance (51) supprime un actionnement de réglage du dossier (27) dans la position couchée.

4. Véhicule selon l'une quelconque des revendications 1, 2 ou 3, **caractérisé en ce qu'**un agencement de ceinture de sécurité est associé au siège du véhicule (1) servant de siège avant du véhicule, l'agencement de ceinture de sécurité présentant une ceinture de sécurité avant (13) et une ceinture de sécurité arrière (15), la ceinture de sécurité arrière (15) pouvant être appliquée à l'utilisateur du siège avant du véhicule (1) afin d'obtenir une application parfaite de la ceinture dans la position couchée.

5. Véhicule selon la revendication 4, **caractérisé en ce que** le dispositif de surveillance (51), en tant que paramètre de ceinture, détecte un actionnement de la ceinture de sécurité arrière (15) par l'utilisateur du siège avant du véhicule (1).

6. Véhicule selon la revendication 4 ou 5, **caractérisé en ce que** le dispositif de surveillance (51) présente au moins un élément de capteur (53, 54, 55) qui détecte si la ceinture de sécurité avant ou arrière (13, 15) est appliquée à l'utilisateur du siège avant du véhicule (1).

7. Véhicule selon la revendication 4, 5 ou 6, **caractérisé en ce que** la ceinture de sécurité arrière (15) présente une ferrure d'extrémité de ceinture (19) réglable dans la direction longitudinale du véhicule (x), laquelle peut être réglée pour l'utilisation de la ceinture de sécurité arrière (15) au niveau du siège avant du véhicule (1) depuis une position de ferrure d'extrémité arrière dans une position de ferrure d'extrémité avant.

8. Véhicule selon la revendication 7, **caractérisé en ce qu'**un élément de capteur (53) du dispositif de surveillance (51) détecte la ferrure d'extrémité (19) de la ceinture de sécurité arrière (15) dans la position de ferrure d'extrémité avant.

9. Véhicule selon l'une quelconque des revendications précédentes, **caractérisé en ce qu'**un élément de capteur (54) du dispositif de surveillance (51) détecte si la fermeture de ceinture de bouclage (33) prévue pour boucler la ceinture de sécurité (13, 15) du siège avant du véhicule (1) est actionnée.

10. Véhicule selon l'une quelconque des revendications 4 à 9, **caractérisé en ce qu'**un élément de capteur (55) du dispositif de surveillance (51) détecte si la ceinture de sécurité avant (13) est actionnée, l'élément de capteur (55) détectant notamment une longueur de traction de la ceinture de sécurité avant (13).

11. Véhicule selon la revendication 10, **caractérisé en ce que** le dispositif de surveillance (51) libère l'actionnement de réglage du siège du véhicule (1) dans la position couchée lorsque le premier élément de capteur (53) reconnaît que la ceinture de sécurité arrière (15) se trouve dans sa position de ferrure d'extrémité avant, le deuxième élément de capteur (54) reconnaît un actionnement de la fermeture de ceinture de bouclage (33) du siège avant du véhicule (1) et le troisième élément de capteur (55) reconnaît un non-actionnement de la ceinture de sécurité avant (13).

12. Véhicule selon l'une quelconque des revendications précédentes, **caractérisé en ce que** dans le cas où le siège avant du véhicule (1) se trouve dans la position couchée et l'utilisateur du siège avant du véhicule (1) détache la ceinture de sécurité arrière (15), le dispositif de commande (45) génère un signal d'avertissement et/ou le dossier (27) se déplace dans une position normale avec un plus grand angle d'inclinaison.

13. Véhicule selon l'une quelconque des revendications 4 à 12, **caractérisé en ce que** dans le cas où le siège avant du véhicule (1) se trouve dans la position couchée et l'utilisateur du siège avant du véhicule (1) passe de la ceinture de sécurité arrière à la ceinture de sécurité avant (13), le dispositif de commande (45) génère un signal d'avertissement et/ou le dossier (27) se déplace dans une position normale.

14. Véhicule selon l'une quelconque des revendications précédentes 4 à 13, **caractérisé en ce que** dans le cas où le siège avant du véhicule (1) se trouve dans la position couchée et l'utilisateur du siège a bouclé la ceinture de sécurité arrière (15), le dispositif de commande (45) bloque une porte du véhicule associée au siège arrière du véhicule (5).

15. Procédé de réglage de l'inclinaison du dossier (27) d'un siège de véhicule (1) dans une position couchée dans un véhicule selon l'une quelconque des revendications précédentes.
